# EUROPEAN PATENT APPLICATION

(11) **EP 3 104 318 A1**
(43) Date of publication of application: **14.12.2016**
(21) Application number: 16157020.5
(22) Date of filing: 23.02.2016
(51) Int. Cl.: G06Q 10/10

(54) **INFORMATION PROCESSING APPARATUS, METHOD, AND PROGRAM**

(30) Priority: 26.05.2015 JP 2015106539
(71) Applicant: Fuji Xerox Co., Ltd., Minato-ku, Tokyo (JP)
(72) Inventor: NAKAZAWA, Shinsuke, Yokohama-shi, Kanagawa (JP)
(74) Representative: Ward, James Norman

(57) **Abstract**

An information processing apparatus includes an obtaining unit, a combining unit, and an output unit. The obtaining unit obtains attribute information concerning a document. The combining unit combines, as viewable image information, the attribute information obtained by the obtaining unit with the document. The output unit outputs the document combined with the viewable image information.

## Description

### BACKGROUND

### Technical Field

The present invention relates to an information processing apparatus, a method and a program.

### Related Art

JP-A-2004-206658 discloses an information display processing system using an annotation. An object of the system is to easily specify a user adding the annotation. In displaying the annotation of a confirmation target user, an addition information display control unit displays the annotation by changing over a display mode to a display mode different from a normal display mode for each of the annotations added by the target user acquired from an annotation DB. For example, a color, density (contrast/brightness), or a property (a set value) of a font (a kind or a size) is changed to display the annotation.

JP-A-2005-190458 discloses providing a browsing person with an electronic document having a single or a plurality of functions by tentatively creating a document with a function having a form capable of being processed by a browsing device by referring to the content of the document, the definition content of the function, and an independent file used in the function. The object thereof is, in using the electronic document and adding the function thereto, making a file used in the electronic document, a processing procedure, and a function independent, and setting and performing one or more functions at a certain position in publication contents of the electronic document without changing the electronic document.

JP-A-2007-004561 discloses a document management system whose objects are: (1) to simplify setting of an access right for a document, (2) to realize a function for grasping which access right is set to a document at a glance, and (3) to simplify a change process of the access right of the document in a case of realizing a work flow. It is disclosed that a stamp (annotation) has access permitting information and access forbidden information of each user in a document management system as additional information, and the access right of the document with the stamp is changed.

### SUMMARY

An object of the present invention is to provide an information processing apparatus, an information processing method and an information processing program in which, in a case where an attribute of a document is changed, image information indicating this fact can be added to a document.
[1] According to an aspect of the invention, there is provided an information processing apparatus including an obtaining unit, a combining unit, and an output unit. The obtaining unit obtains attribute information concerning a document. The combining unit combines, as viewable image information, the attribute information obtained by the obtaining unit with the document. The output unit outputs the document combined with the viewable image information.
[2] It may be the information processing apparatus according to [1], wherein the obtaining unit obtains an operation history concerning the document, and the combining unit combines, by using the operation history, image information from which information concerning a user who operated the document is recognizable with the document.
[3] It may be the information processing apparatus according to [1] or [2], wherein the obtaining unit obtains a viewing history concerning a predetermined user, and the combining unit combines image information indicating the viewing history with the document at a predetermined location within the document.
[4] It may be the information processing apparatus according to any one of [1] to [3], wherein the combining unit combines, as the viewable image information, information concerning updating of the document with the document.
[5] It may be the information processing apparatus according to any one of [1] to [4], wherein the obtaining unit obtains information concerning an access right for the document, and the combining unit combines, as the viewable image information, information concerning a user having the access right with the document.
[6] It may be the information processing apparatus according to any one of [1] to [5], wherein the obtaining unit obtains attribute information concerning a folder or a document under a target folder, the combining unit relates the attribute information obtained by the obtaining unit to the target folder, as viewable image information; and the output unit outputs the viewable image information related to the target folder by the combining unit in association with the target folder.
[7] It may be the information processing apparatus according to [6], wherein combining of the attribute information by the combining unit or outputting of the viewable image information by the output unit is performed in accordance with a request made on the target folder by a user.
[8] According to another aspect of the invention, there is provided an information processing method including: obtaining attribute information concerning a document; combining, as viewable image information, the attribute information with the document; and outputting the document combined with the viewable image information.
[9] According to another aspect of the invention, there is provided an information processing program causing a computer to execute a process, the process including: obtaining attribute information concerning a document; combining, as viewable image information, the attribute information with the document; and outputting the document combined with the viewable image information.

According to the information processing apparatus of [1], in a case where an attribute of a document is changed, attribute information indicating this fact can be provided to the document.

According to the information processing apparatus of [2], information concerning a user who operated the document can be combined with the document.

According to the information processing apparatus of [3], a viewing history concerning a predetermined user can be combined at a predetermined location within the document.

According to the information processing apparatus of [4], information concerning updating of the document can be combined with the document.

According to the information processing apparatus of [5], information concerning a user having the access right with the document can be combined.

According to the information processing apparatus of [6], attribute information concerning a folder or a document under a target can be output in association with the folder.

According to the information processing apparatus of [7], combining or outputting can be performed in accordance with a request made on the folder by a user.

According to the information processing method of [8], in a case where an attribute of a document is changed, attribute information indicating this fact can be provided to the document.

According to the information processing program of [9], in a case where an attribute of a document is changed, attribute information indicating this fact can be provided to the document.

### BRIEF DESCRIPTION OF DRAWINGS

Exemplary embodiments of the present invention will be described in detail based on the following figures, wherein:
Fig. 1 is a block diagram illustrating conceptual modules forming an example of the configuration of an exemplary embodiment;
Fig. 2 illustrates an example of a system configuration utilizing an exemplary embodiment;
Fig. 3 is a flowchart illustrating an example of processing according to an exemplary embodiment;
Fig. 4 illustrates an example of a document to be processed;
Figs. 5 through 11 illustrate examples of processing according to an exemplary embodiment;
Fig. 12 illustrates an example of the data structure of a rule table;
Fig. 13 illustrates an example of processing according to the related art;
Fig. 14 illustrates an example of processing according to an exemplary embodiment; and
Fig. 15 is a block diagram illustrating an example of the hardware configuration of a computer implementing an exemplary embodiment.

### DETAILED DESCRIPTION

An exemplary embodiment of the invention will be described below with reference to the accompanying drawings.

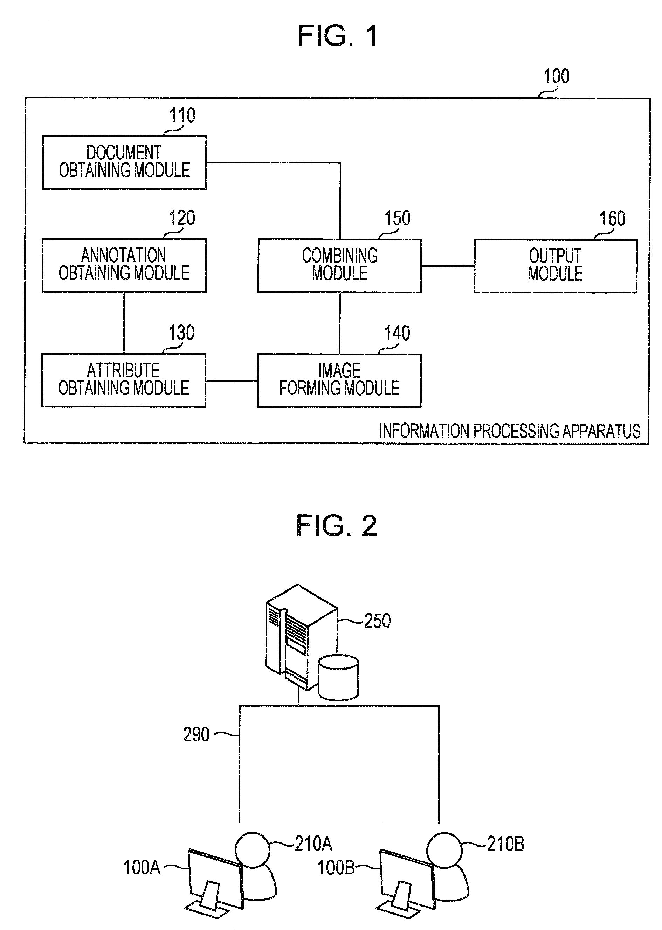

Fig. 1 is a block diagram illustrating conceptual modules forming an example of the configuration of the exemplary embodiments of the invention.

Generally, modules are software (computer programs) components or hardware components that can be logically separated from one another. Accordingly, the modules of the exemplary embodiments of the invention are not only modules of a computer program, but also modules of a hardware configuration. Thus, the exemplary embodiments will also be described in the form of a computer program for allowing a computer to function as those modules (a program for causing a computer to execute program steps, a program for allowing a computer to function as corresponding units, or a computer program for allowing a computer to implement corresponding functions), a system, and a method. While expressions such as "store", "storing", "being stored", and equivalents thereof are used for the sake of description, such expressions indicate, when the exemplary embodiments relate to a computer program, storing the computer program in a storage device or performing control so that the computer program is stored in a storage device. Modules may correspond to functions based on a one-to-one relationship. In terms of implementation, however, one module may be constituted by one program, or plural modules may be constituted by one program. Conversely, one module may be constituted by plural programs. Additionally, plural modules may be executed by using a single computer, or one module may be executed by using plural computers in a distributed or parallel environment. One module may integrate another module therein. Hereinafter, the term "connection" includes not only physical connection, but also logical connection (sending and receiving of data, giving instructions, reference relationships among data elements, etc.). The term "predetermined" means being determined prior to a certain operation, and includes the meaning of being determined prior to a certain operation before starting processing of the exemplary embodiments, and also includes the meaning of being determined prior to a certain operation even after starting processing of the exemplary embodiments, in accordance with the current situation/state or in accordance with the previous situation/state. If there are plural "predetermined values", they may be different values, or two or more of the values (or all the values) may be the same. A description having the meaning "in the case of A, B is performed" is used as the meaning "it is determined whether the case A is satisfied, and B is performed if it is determined that the case A is satisfied", unless such a determination is not necessary.

A system or an apparatus may be realized by connecting plural computers, hardware units, devices, etc., to one another via a communication medium, such as a network (including communication based on a one-to-one correspondence), or may be realized by a single computer, hardware unit, device, etc. The terms "apparatus" and "system" are used synonymously. The term "system" does not include merely a man-made social "mechanism" (social system).

Additionally, every time an operation is performed by using a corresponding module or every time each of plural operations is performed by using a corresponding module, target information is read from a storage device, and after performing the operation, a processed result is written into the storage device. Accordingly, a description of reading from the storage device before an operation or writing into the storage device after an operation may be omitted. Examples of the storage device may be a hard disk (HD), a random access memory (RAM), an external storage medium, a storage device using a communication line, a register within a central processing unit (CPU), etc.

An information processing apparatus 100 according to the exemplary embodiments processes attributes of a document. As shown in Fig. 1, the information processing apparatus 100 includes a document obtaining module 110, an annotation obtaining module 120, an attribute obtaining module 130, an image forming module 140, a combining module 150, and an output module 160.

The document obtaining module 110 is connected to the combining module 150. The document obtaining module 110 obtains a document. In this case, obtaining of a document includes reading of a document stored in a hard disk (may be built in a computer or may be connected to a computer via a network) and receiving of a document managed by, for example, a document management device, via a communication network. The type of document is not restricted, and a business document or an advertisement brochure, for example, may be obtained.

Documents are, in most cases, text data, or may be electronic data (also called files), such as graphics, images, video, and sound, or a combination of text data and electronic data. Documents are objects that may be stored, edited, and searched for, and may be shared among systems and users as individual units, or are similar to such objects. More specifically, documents may include documents and web pages created by a document creation program.

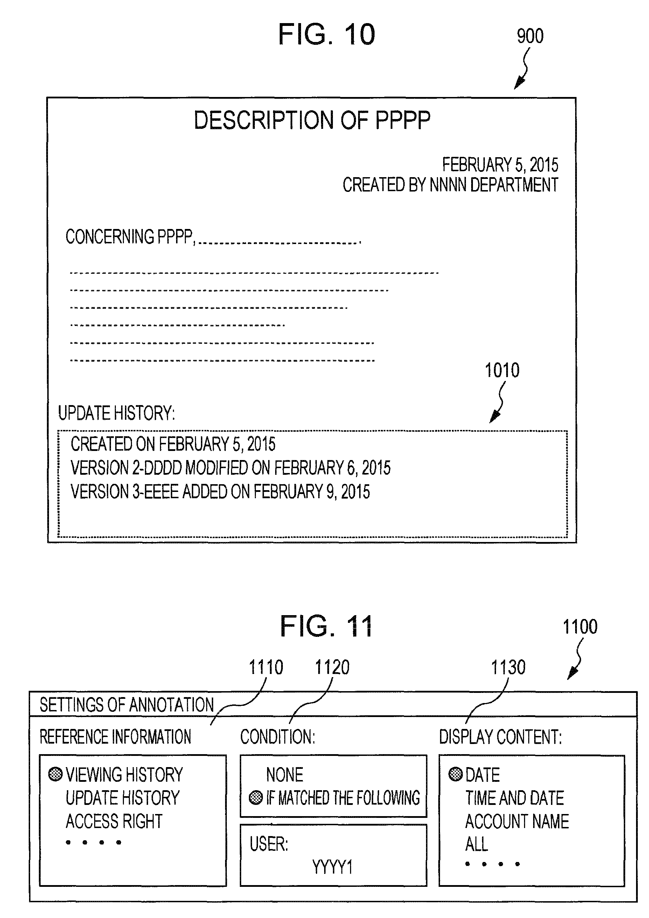

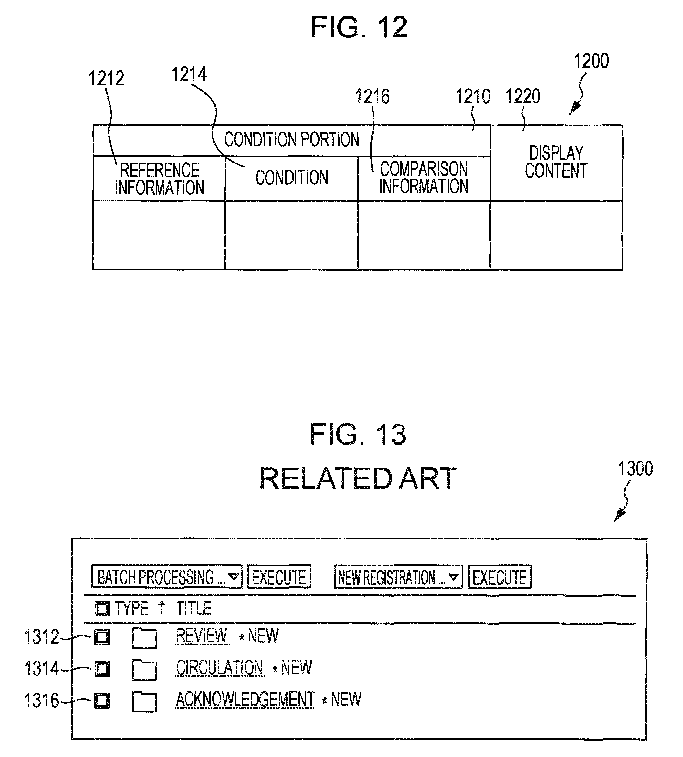

The annotation obtaining module 120 is connected to the attribute obtaining module 130. The annotation obtaining module 120 receives annotation information appended to a document. Annotation information is information added to a document. For example, annotation information is appended in the form of, for example, an electronic tag, to a document, and may be added, deleted, or moved to another position by a user operation. The content of annotation information indicated in an electronic tag may also be added, changed, or deleted by a user operation. Additionally, rules (conditions) for extracting attributes may be associated with annotation information, which will be discussed later with reference to Figs. 11 and 12.

The attribute obtaining module 130 is connected to the annotation obtaining module 120 and the image forming module 140. The attribute obtaining module 130 obtains attribute information concerning a document. In this case, attributes do not form the content of a document itself, but include file attributes, histories (such as an operation history and a viewing history), and annotations.

For example, the attribute obtaining module 130 may obtain attribute information according to the rules indicated within annotation information obtained by the annotation obtaining module 120.

The attribute obtaining module 130 may obtain an operation history concerning a document.

The attribute obtaining module 130 may obtain a viewing history concerning a predetermined user.

The attribute obtaining module 130 may obtain information concerning an access right for a document.

The attribute obtaining module 130 may obtain attribute information concerning a folder or a document under a target folder.

The image forming module 140 is connected to the attribute obtaining module 130 and the combining module 150. The image forming module 140 converts attribute information obtained by the attribute obtaining module 130 into viewable image information. In this case, "viewable" means that attribute information is converted into image information that is visually readable. For example, attribute data is converted into a character image or a graphic image. A converted image is then combined with a target document.

The combining module 150 is connected to the document obtaining module 110, the image forming module 140, and the output module 160. The combining module 150 combines, as viewable image information, attribute information obtained by the attribute obtaining module 130 with a document obtained by the document obtaining module 110. In this case, "combining" refers to superposing of image information and a document on each other. For example, image information may be written over a document, or logical OR operation may be performed between a document and image information. Part of image information may extend to outside of a document as long as the image information partially overlaps the document.

The combining module 150 may combine, by using the operation history obtained by the attribute obtaining module 130, image information from which information concerning a user who operated a document obtained by the document obtaining module 110 is recognizable with the document.

The combining module 150 may combine image information indicating the viewing history obtained by the attribute obtaining module 130 with a document at a predetermined location within the document.

The combining module 150 may combine, as image information, information concerning the updating of a document with this document. For example, the combining module 150 may combine information concerning the updating of a document (version control) as image information.

The combining module 150 may combine, as image information, information concerning a user having an access right for a document with this document.

The combining module 150 may relate, as viewable image information, attribute information obtained by the attribute obtaining module 130 to a target folder.

The output module 160 is connected to the combining module 150. The output module 160 outputs a document which is combined with image information by the combining module 150. Outputting of a document includes displaying of a document on a display device, printing of a document by a printer, sending of a document by an image transmitting device, such as a fax machine, writing of a document into a document management device, storing of a document in a storage medium, such as a memory card, and supplying a document to another information processing apparatus.

The output module 160 may output image information which is related to a target folder by the combining module 150 in association with this target folder.

If attribute information concerning a folder is an object to be processed, the combining of the attribute information by the combining module 150 or the outputting of the attribute information by the output module 160 may be performed in accordance with a request made by a user on this folder. The attribute obtaining module 130 may obtain attribute information when a request is made on a folder by a user, or may obtain attribute information before a request is made.

Fig. 2 illustrates an example of a system configuration utilizing the information processing apparatus 100 of the exemplary embodiments.

Information processing apparatuses 100A and 100B and a document management device 250 are connected to each other via a communication network 290. The communication network 290 may be a wireless or wired medium, or a combination thereof, and may be, for example, the Internet or an intranet as a communication infrastructure. The information processing apparatuses 100A and 100B are operated by users 210A and 210B, respectively. Hereinafter, the information processing apparatuses 100A and 100B will be simply referred to as the "information processing apparatus 100" unless it is necessary to distinguish them from each other, and the users 210A and 210B will be simply referred to as the "user 210" unless it is necessary to distinguish them from each other. In the example shown in Fig. 2, two image processing apparatuses 100 are connected to the document management device 250. However, one or three or more image processing apparatuses 100 may be connected to the document management device 250.

The document management device 250 receives an instruction to create a folder or to register, edit, or delete a document from the user 210, and stores a document in a storage area within the document management device 250. Functions of the document management device 250 may be implemented as cloud services.

The document management device 250 also stores the history of operations performed by the user 210 on a document or a folder in the storage area by using the information processing apparatus 100.

The document management device 250 also stores annotation information related to a document or a folder in the storage area.

The document management device 250 also sends a folder, a document, or annotation information in response to a request from the user 210 sent from the information processing apparatus 100.

The information processing apparatus 100 creates and edits a document file or a folder and registers it in the document management device 250.

The information processing apparatus 100 also creates and edits an annotation related to a document file or a folder in accordance with an operation performed by the user 210 and registers the annotation in the document management device 250.

When displaying a document file or a folder, the information processing apparatus 100 displays an annotation related to the document file or the folder.

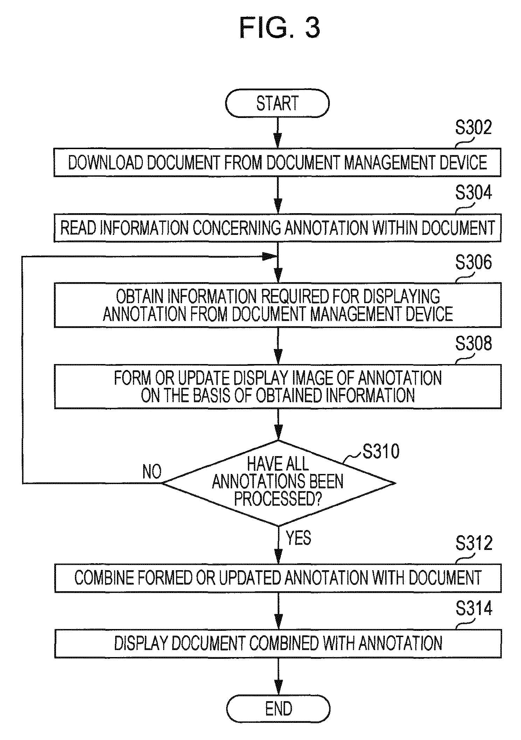

Fig. 3 is a flowchart illustrating an example of processing according to the exemplary embodiments.

In step S302, the document obtaining module 110 downloads a document from the document management device 250.

In step S304, the annotation obtaining module 120 reads information concerning an annotation within the document. More specifically, the annotation obtaining module 120 extracts annotation information related to the document downloaded in step S302. The annotation information may contain certain rules. In this example, an annotation is visually appended to the document. However, an annotation may be transparent, that is, if viewable image information is not included in an annotation, it is not necessary to let an operator recognize that an annotation is appended to the document.

Thereafter, steps S306 through S310 are repeatedly executed in a loop the same number of times as the number of annotations related to the document.

In step S306, the attribute obtaining module 130 obtains information required for displaying an annotation from the document management device 250.

In step S308, the image forming module 140 forms or updates a display image of an annotation (viewable image information) on the basis of the information obtained by the attribute obtaining module 130.

In step S310, the attribute obtaining module 130 determines whether or not all annotations have been processed. If all annotations have been processed, the process proceeds to step S312. If not all annotations have been processed, the process returns to step S306. That is, if there is any annotation for which the information processing apparatus 100 has not yet formed a display image, steps S306 and S308 are repeated.

In step S312, the combining module 150 combines a formed or updated annotation with the document.

In step S314, the output module 160 displays the document to which an annotation is combined. That is, if viewable image information is included in an annotation, the annotation is displayed so that a user can visually recognize that the image information is added to the document. An annotation may be explicitly displayed (for example, the outer frame around an annotation may be displayed) or may not have to be explicitly displayed (for example, an annotation may be displayed against a transparent background without indicating an outer frame around the annotation).

The processing content will be described below through illustration of a specific example.

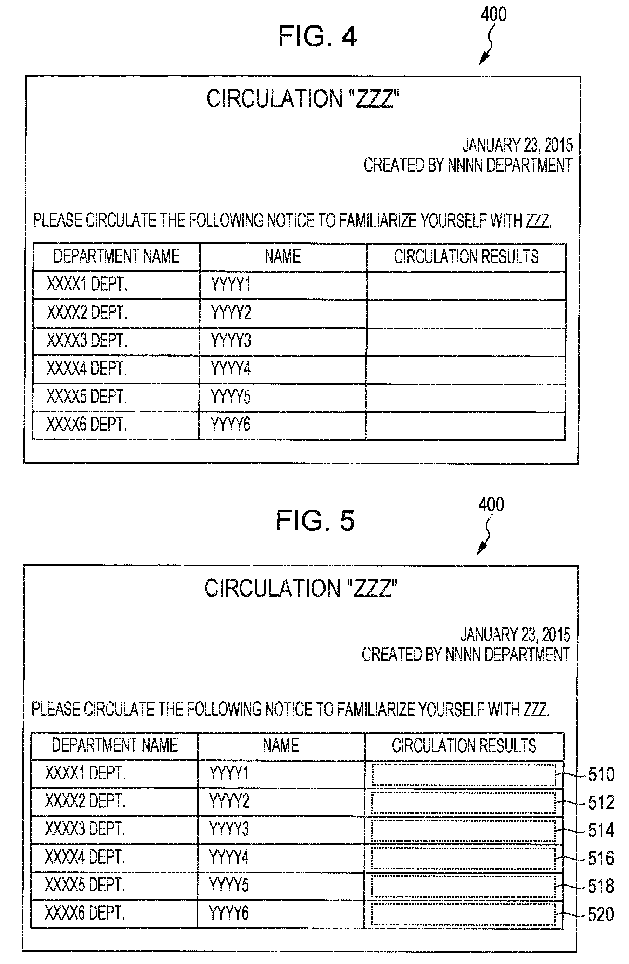

Fig. 4 illustrates an example of a document 400 to be processed.

It is now assumed that the document 400, which is a circulation notice having a cover shown in Fig. 4, is formed and distributed (circulated) to departments to which it may concern.

In the related art, an annotation is statically appended to a document. Accordingly, if it is desired to indicate results in the column of "circulation results" within the document 400, the person circulated the document 400 is required to manually append an annotation to the document 400.

In the exemplary embodiments, an annotation indicating information that "a target user has viewed a document" is created and appended onto a page of the document 400 in advance by an operation of the user 210.

When the target user has checked the document 400, a viewing history is stored in the document management device 250.

Then, when the same document 400 is checked, the viewer of the information processing apparatus 100 obtains attribute information concerning the document 400 from the document management device 250 and displays the attribute information as an annotation according to the rules preset in the annotation region.

For example, if it is desired that circulation results concerning six users YYYY1 through YYYY6 be automatically reflected, six annotations 510 through 520 containing the rules are appended to portions where circulation results are desirably reflected (in this case, the columns of "circulation results"), as shown in Fig. 5.

In the example shown in Fig. 5, the portions where annotations 510 through 520 are desirably reflected are indicated by imaginary dotted-line rectangles. However, the contents of the annotations 510 through 520 may not have to be displayed (the columns of "circulation results" may be left transparent).

In the annotations 510 through 520, the conditions for displaying the annotations 510 through 520 are set as internal attributes of the annotations 510 through 520. For example, the condition "the first date on which the document 400 is checked by YYYY1" is set as the first annotation 510. Similarly, the condition "the first date on which the document 400 is checked by YYYY2" is set as the annotation 512.

Then, the document 400 is circulated. More specifically, the document 400 is made available to the users YYYY1 through YYYY6 so that they can check, and the users YYYY1 through YYYY6 are instructed to check the document 400. The order in which the users YYYY1 through YYYY6 will check the document 400 may be specified. Upon receiving the circulation of the document 400, the user YYYY1, for example, merely checks the document 400 and does not perform any specific operation. At least, the user YYYY1 does not have to indicate a date on which the user YYYY1 checked the document 400 in the annotation 510.

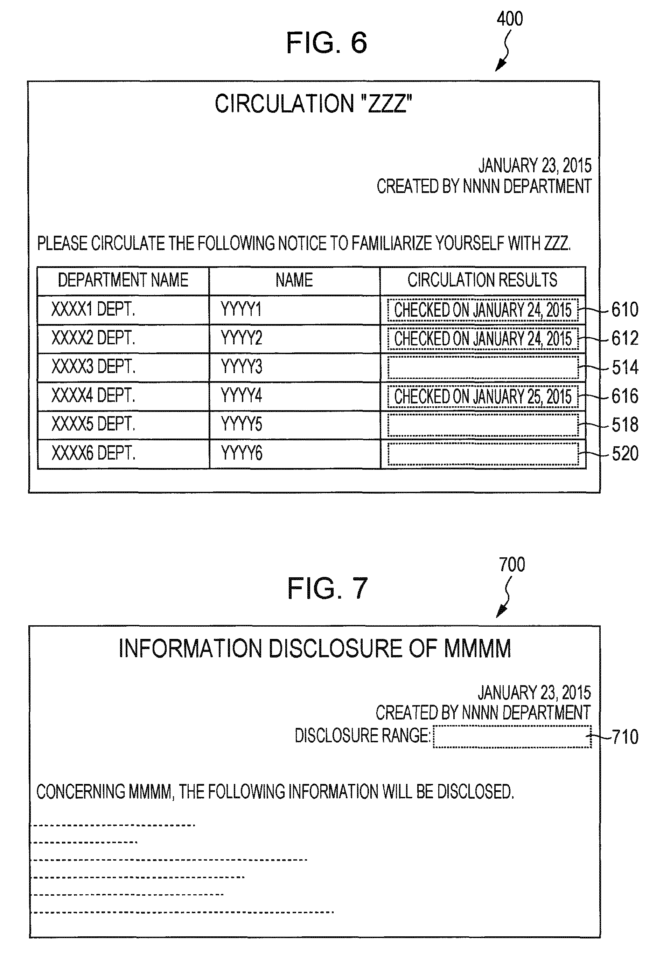

In this manner, after the document 400 has been circulated among three users (YYYY1, YYYY2, and YYYY4), the document 400 is displayed, as shown in Fig. 6, as an example. That is, within the column of "circulation results" (portion to which an annotation is appended), which is an example of "a predetermined location", corresponding to a user who has checked the document 400, the date on which the user checked the document 400 is indicated as an example of "information concerning a user operated the document". An annotation 610 is equivalent to an annotation obtained by displaying the attribute content "checked on January 24, 2015" within the annotation 510 shown in Fig. 5. An annotation 612 is equivalent to an annotation obtained by displaying the attribute content "checked on January 24, 2015" within the annotation 512 shown in Fig. 5. An annotation 616 is equivalent to an annotation obtained by displaying the attribute content "checked on January 25, 2015" within the annotation 516 shown in Fig. 5.

With this configuration, a user does not have to append or modify an annotation explicitly. An annotation is displayed on the basis of information stored in the document management device 250, and thus, a user is unable to alter the content of annotation arbitrarily.

By employing the form in which an annotation is appended (attached) to a document, a user is able to clearly specify what and where the user wishes to display by the use of an annotation, unlike the approach to checking the content in the form of a mere viewing history list.

In a manner similar to the processing utilizing the viewing history, information concerning who printed the document 400 or who updated the document 400 most recently may be automatically updated by simply setting such information as the condition of an annotation.

By specifying a condition in greater detail, the results, for example, whether or not a specific page has been checked or whether or not a document file has been opened for a predetermined time (for example, five minutes), may be automatically reflected in the portion of an annotation.

As another example, processing for automatically displaying the disclosure range of a document by using an access right for this document will be described below.

A document 700 shown in Fig. 7 is a document having a restricted disclosure range (that is, an access right for this document 700 is provided to predetermined user groups).

In the document 700, an annotation 710 is appended to a portion indicated by a dotted-line rectangle on the right side of a description "disclosure range". In the annotation 710, as the condition for displaying the names of user groups that are allowed to refer to the document 700, user groups having an access right for the document 700 are set.

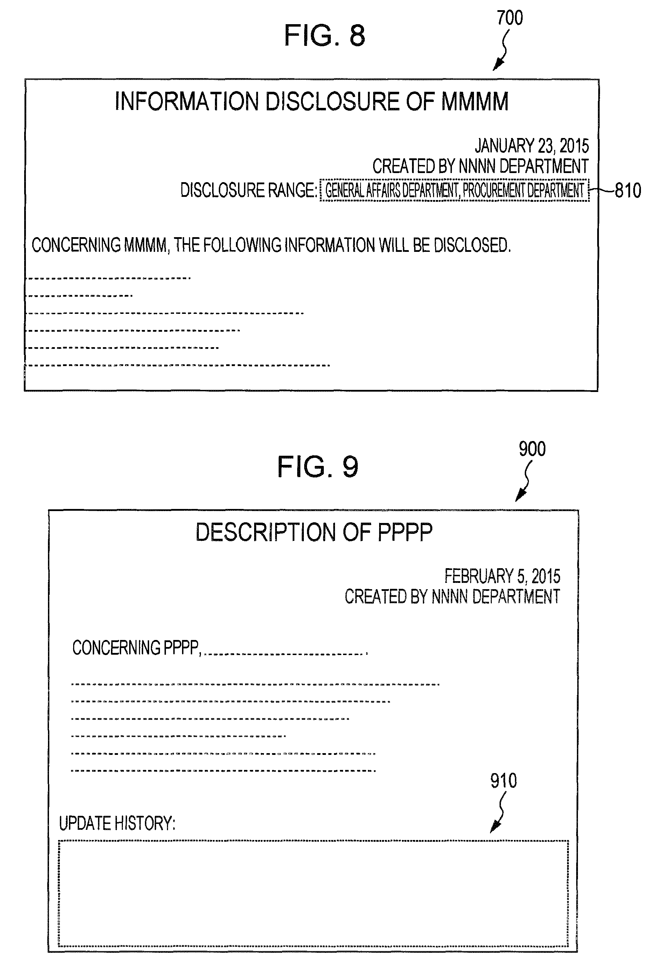

The document 700 is registered in the document management device 250, and an access right is suitably set by a user operation. More specifically, an access right is set for a general affairs department and a procurement department, for example. Then, when the document 700 is downloaded from the document management device 250 and is displayed, access right information set in the document 700 stored in the document management device 250 is extracted, and the display of the annotation 710 is updated. As a result, the names of user groups (in this case, the general affairs department and the procurement department) that are currently allowed to refer to the document 700 are automatically displayed, as in an annotation 810 shown in Fig. 8.

With this configuration, even if the disclosure range is changed due to a modification in the access right, the content of the access right may be suitably and automatically indicated in the annotation 810 in accordance with the situation without changing the content of the document 700.

Additionally, if the access right for the document 700 is inconsistent with the intended disclosure range, a user is more likely to recognize such inconsistencies when checking the document 700.

As another exemplary embodiment, processing for automatically displaying the update history of a document by the document management device 250 will be discussed below.

In a document 900 shown in Fig. 9, an annotation 910 is appended to a portion indicated by a dotted-line rectangle under the "update history". In the annotation 910, as the condition for displaying the update history of the document 900, extracting of update history information concerning the document 900 is set.

The document 900 is registered in the document management device 250, and an access right is suitably set by a user operation. It is assumed that the document 900 is then modified and a new version of the document 900 is registered in the document management device 250. In this case, the document management device 250 records information concerning the new version in the update history on the basis of the operation performed by the user to add the new version. Then, when the document 900 is downloaded from the document management device 250 and is displayed, the update history of the document 900 stored in the document management device 250 is extracted, and the display of the annotation 910 is updated. As a result, the update history is displayed, such as in an annotation 1010 shown in Fig. 10. The annotation 1010 is equivalent to an annotation obtained by inserting the attribute content (update history) "created on February 5, 2015, version 2-DDDD modified on February 6, 2015, and version 3-EEEE added on February 9, 2015" to the annotation 910 shown in Fig. 9. In this example, the date on which the document 900 is registered in the document management device 250 and the comments about the versions are automatically reflected.

With this configuration, the state of the document 900 updated and reflected in the document management device 250 is displayed on the document 900.

An example of a user interface for setting an annotation with certain rules, such as that discussed above, is shown in Fig. 11.

Within an annotation setting screen 1100, a reference information column 1110, a condition column 1120, and a display content column 1130 are indicated. Rules are set by using the reference information column 1110, the condition column 1120, and the display content column 1130. In the example shown in Fig. 11, an annotation is set as follows: in the circulation shown in Figs. 4 through 6, if the user YYYY1 has checked the circulation, the date on which the user YYYY1 has checked is displayed.

In this manner, by using the user interface, it is possible to select which item of attribute information concerning a document stored in the document management device 250 will be checked, and under which condition what type of content will be displayed.

Then, the rules set by using the annotation setting screen 1100 are stored, for example, in a rule table 1200, in association with an annotation. Fig. 12 illustrates an example of the data structure of the rule table 1200. The rule table 1200 includes a condition portion column 1210 and a display content column 1220. The condition portion column 1210 includes a reference information column 1212, a condition column 1214, and a comparison information column 1216. The reference information column 1212 corresponds to the reference information column 1110 shown in Fig. 11. The condition column 1214 and the comparison information column 1216 correspond to the condition column 1120 shown in Fig. 11. The display content column 1220 corresponds to the display content column 1130 shown in Fig. 11.

In the condition portion column 1210, a condition portion is stored. In the reference information column 1212, reference information is stored. In the condition column 1214, a condition is stored. If no condition is set, it means that information in the reference information column 1212 is extracted unconditionally. In the comparison information column 1216, comparison information is stored. Comparison information may be unnecessary depending on the condition. In the display content column 1220, the content to be displayed when the conditions indicated in the condition portion column 1210 are satisfied is stored. Within the display content column 1220, the display mode, such as the display position and the color of characters, may be set.

An example in which information concerning an annotation is displayed in a list of folders will be discussed below.

In the related art, a list, such as that shown in Fig. 13, is displayed. In a folder display screen 1300, for example, folder display lines 1312, 1314, and 1316 are displayed. The folder display lines 1312, 1314, and 1316 merely display information concerning the folders. Even if an annotation is set in a folder, such an annotation is displayed merely in the form of a static attribute.

In contrast, in this exemplary embodiment, as an annotation of a folder, annotation information concerning a document or a subfolder under this folder may be displayed in a parent folder.

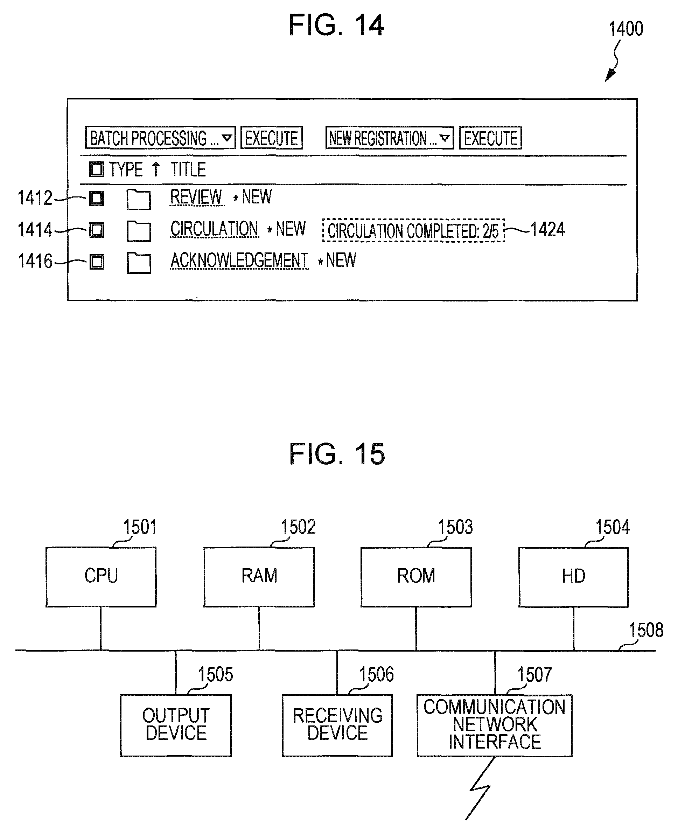

In the example shown in Fig. 14, documents to be circulated are stored under a "circulation" folder in a folder display line 1414, and an annotation is related to the "circulation" folder under the rule that a document for which all pages appended with annotations have been checked is determined to be in a state of "completion". If there are five documents appended with annotations under the "circulation" folder and if two out of five are in the state of "completion" (all the pages appended with annotations of the two documents have been checked), "circulation completed: 2/5" is indicated as an annotation 1424 within the folder display line 1414.

In this example, attribute information is displayed as a character string within the annotation 1424. However, attribute information may be displayed in graphics, such as an icon.

The characters "circulation completed" may be set as desired, and the rule that under which condition the numeric value indicating the number of documents in the state of "completion" is measured and displayed is set as an annotation of a folder.

A user may select whether target documents will be placed immediately under a folder or in a subfolder, and if the target folders are placed in a subfolder, the position of the subfolder in a hierarchical structure may also be selected. If the update date for the target documents may also be specified, documents may be narrowed down to, for example, documents for the latest several months.

Additionally, the numeric value to be measured and the content may be separately set as annotations for documents "circulation completed" and documents "circulation not completed", and may be separately displayed. In this case, a link may be provided in each annotation, and when the link is clicked, a list of target documents may be displayed.

As another example, information concerning access rights for documents or subfolders under a parent folder may be integrated into the annotation in the parent folder and be displayed.

A list of user groups that are allowed to check documents may be merged and be displayed in the annotation of a parent folder. This makes it possible to check whether or not access rights are correctly set by merely checking the annotation of the parent folder without individually checking access rights for documents and for subfolders. Particularly, when a document under one folder is moved to another folder, the access right under the previous folder may be inherited and be different from the intended access right. Such a situation is easily detectable if all annotations are checked at one time within one folder.

It may be possible to set a rule that, if a document under a folder is sent as a mail, the destination and the date are displayed as an annotation of the folder.

The hardware configuration of a computer in which a program serving as the exemplary embodiments of the invention is executed is a general computer, such as a personal computer (PC) or a server, as shown in Fig. 15. More specifically, such a computer uses a CPU 1501 as a processor (operation unit) and a RAM 1502, a ROM 1503, and an HD 1504 as storage devices. As the HD 1504, a hard disk or a solid state drive (SSD) may be used. The computer includes the CPU 1501, the RAM 1502, the ROM 1503, the HD 1504, such as an auxiliary storage device (may be a flash memory), an output device 1505, such as a cathode ray tube (CRT), a liquid crystal display, and a speaker, a receiving device 1506, a communication network interface 1507, and a bus 1508. The CPU 1501 executes a program, such as the document obtaining module 110, the annotation obtaining module 120, the attribute obtaining module 130, the image forming module 140, the combining module 150, and the output module 160. The RAM 1502 stores this program and data therein. The ROM 1503 stores a program for starting the computer. The receiving device 1506 receives data on the basis of an operation performed by a user on a keyboard, a mouse, a touch panel, or a microphone. The communication network interface 1507 is, for example, a network interface card, for communicating with a communication network. The above-described elements are connected to one another via the bus 1508 and send and receive data to and from one another. The above-described computer may be connected to another computer configured similarly to this computer via a network.

In the above-described exemplary embodiments, concerning an element implemented by a computer program, such a computer program, which is software, is read into a system having the system configuration shown in Fig. 15, and the above-described exemplary embodiments are implemented in a cooperation of software and hardware resources.

The hardware configurations shown in Fig. 15 are only examples, and the exemplary embodiments may be configured in any manner as long as the modules described in the exemplary embodiments are executable. For example, some modules may be configured as dedicated hardware (for example, an application specific integrated circuit (ASIC)), or some modules may be installed in an external system and be connected to the PC via a communication line. Alternatively, a system, such as that shown in Fig. 15, may be connected to a system, such as that shown in Fig. 15, via a communication line, and may be operated in cooperation with each other. Additionally, instead of into a PC, the modules may be integrated into a mobile information communication device (including a cellular phone, a smartphone, a mobile device, and a wearable computer), a home information appliance, a robot, a copying machine, a fax machine, a scanner, a printer, or a multifunction device (image processing apparatus including two or more functions among a scanner, a printer, a copying machine, and a fax machine).

In the above-described exemplary embodiments, an annotation is appended to a page of a document, and viewable image information is displayed at a location at which the annotation is appended. If, for example, within a document, there are annotations in portions other than the first page of the document, copies of such annotations may be created and displayed together on the first page (a new page may be created, in which case, the original first page will be the second page). If, within a document (A), a link to another document (B) is provided and if there are annotations in the link document (B), copies of such annotations may be created and displayed together on the first page (a new page may be created, in which case, the original first page will be the second page) of the document (A).

The above-described program may be stored in a recording medium and be provided. The program recorded on a recording medium may be provided via a communication medium. In this case, the above-described program may be implemented as a "non-transitory computer readable medium storing the program therein" in an exemplary embodiment of the invention.

The "non-transitory computer readable medium storing a program therein" is a recording medium storing a program therein that can be read by a computer, and is used for installing, executing, and distributing the program.

Examples of the recording medium are digital versatile disks (DVDs), and more specifically, DVDs standardized by the DVD Forum, such as DVD-R, DVD-RW, and DVD-RAM, DVDs standardized by the DVD+RW Alliance, such as DVD+R and DVD+RW, compact discs (CDs), and more specifically, a read only memory (CD-ROM), a CD recordable (CD-R), and a CD rewritable (CD-RW), Blu-ray disc (registered trademark), a magneto-optical disk (MO), a flexible disk (FD), magnetic tape, a hard disk, a ROM, an electrically erasable programmable read only memory (EEPROM) (registered trademark), a flash memory, a RAM, a secure digital (SD) memory card, etc.

The entirety or part of the above-described program may be recorded on such a recording medium and stored therein or distributed. Alternatively, the entirety or part of the program may be transmitted through communication by using a transmission medium, such as a wired network used for a local area network (LAN), a metropolitan area network (MAN), a wide area network (WAN), the Internet, an intranet, or an extranet, a wireless communication network, or a combination of such networks. The program may be transmitted by using carrier waves.

The above-described program may be part of another program, or may be recorded, together with another program, on a recording medium. The program may be divided and recorded on plural recording media. Further, the program may be recorded in any form, for example, it may be compressed or encrypted, as long as it can be reconstructed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing apparatus comprising:
an obtaining unit that obtains attribute information concerning a document;
a combining unit that combines, as viewable image information, the attribute information obtained by the obtaining unit with the document; and
an output unit that outputs the document combined with the viewable image information.

2. The information processing apparatus according to Claim 1, wherein:
the obtaining unit obtains an operation history concerning the document; and
the combining unit combines, by using the operation history, image information from which information concerning a user who operated the document is recognizable with the document.

3. The information processing apparatus according to Claim 1 or 2, wherein:
the obtaining unit obtains a viewing history concerning a predetermined user; and
the combining unit combines image information indicating the viewing history with the document at a predetermined location within the document.

4. The information processing apparatus according to any one of Claims 1 to 3, wherein the combining unit combines, as the viewable image information, information concerning updating of the document with the document.

5. The information processing apparatus according to any one of Claims 1 to 4, wherein:
the obtaining unit obtains information concerning an access right for the document; and
the combining unit combines, as the viewable image information, information concerning a user having the access right with the document.

6. The information processing apparatus according to any one of Claims 1 to 5, wherein:
the obtaining unit obtains attribute information concerning a folder or a document under a target folder;
the combining unit relates the attribute information obtained by the obtaining unit to the target folder, as viewable image information; and
the output unit outputs the viewable image information related to the target folder by the combining unit in association with the target folder.

7. The information processing apparatus according to Claim 6, wherein combining of the attribute information by the combining unit or outputting of the viewable image information by the output unit is performed in accordance with a request made on the target folder by a user.

8. An information processing method comprising:
obtaining attribute information concerning a document;
combining, as viewable image information, the attribute information with the document; and
outputting the document combined with the viewable image information.

9. An information processing program causing a computer to execute a process, the process comprising:
obtaining attribute information concerning a document;
combining, as viewable image information, the attribute information with the document; and
outputting the document combined with the viewable image information.
